Europäisches Patentamt

(19) European Patent Office

Office européen des brevets

(11) Numéro de publication: **0 186 678**
**B1**

(12) # FASCICULE DE BREVET EUROPÉEN

(45) Date de publication du fascicule du brevet:
**31.05.89**

(51) Int. Cl.⁴: **G 01 K 13/06**

(21) Numéro de dépôt: **85902579.3**

(22) Date de dépôt: **13.06.85**

(86) Numéro de dépôt international:
**PCT/FR 85/00149**

(87) Numéro de publication internationale:
**WO 86/00132 (03.01.86 Gazette 86/01)**

(54) **PROCEDE ET DISPOSITIFS POUR MESURER LA TEMPERATURE D'UN ELEMENT FILIFORME EN DEFILEMENT.**

(30) Priorité: **15.06.84 FR 8409369**

(43) Date de publication de la demande:
**09.07.86 Bulletin 86/28**

(45) Mention de la délivrance du brevet:
**31.05.89 Bulletin 89/22**

(84) Etats contractants désignés:
**AT BE CH DE FR GB IT LI LU NL SE**

(56) Documents cité:
**DE-A-3 220 087**
**DE-A-3 233 863**
**DE-C-815 856**
**GB-A-1 552 793**

(73) Titulaire: **BERTIN & CIE, Boîte Postale No. 3,**
**F-78370 Plaisir (FR)**

(72) Inventeur: **ROTH, Bernard, Marie, 164, quinto rue**
**d'Aguesseau, F-92100 Boulogne Billancourt (FR)**
Inventeur: **NEVEU, Daniel, René, Melchior, 60,**
**avenue du Général de Gaulle, F-94500 Champigny**
**sur Marne (FR)**
Inventeur: **DELIKAT, Catherine, 42, rue de**
**l'Aqueduc, F-75010 Paris (FR)**

(74) Mandataire: **de Boisse, Louis Arnaud, CABINET de**
**BOISSE 37, Avenue Franklin D. Roosevelt,**
**F-75008 Paris (FR)**

## Description

La présente invention concerne un procédé pour mesurer la température d'un élément filiforme en défilement, sans contact mécanique avec l'élément, et des dispositifs de mise en oeuvre du procédé.

Dans ce qui suit, on désignera par élément filiforme tout corps allongé tel que fil métallurgique, tube à section circulaire ou polygonale, feuille ou bande métalique, profilés, etc. en déplacement continu ou discontinu.

Le suivi en continu des procédés de fabrication nécessite fréquemment une bonne connaissance de la température des produits en défilement.

La mesure de la température d'un fil en sortie de filière, ou d'une bande en sortie de laminoir peut être effectuée par contact avec un thermocouple ou par des moyens conducteurs de la chaleur destinés à venir en contact avec la surface de l'élément. Cette technique n'est possible que si le défilement du produit est lent, de plus la validité de la mesure est liée à la qualité du contact.

On utilise également des thermomètres infrarouges ou radiothermomètres dont l'emploi est imprécis en raison d'une part de la méconnaissance et des variations de l'émissivité du fil et d'autre part des difficultés de visée sur un fil de faible diamètre dans un environnement propre. Dans le domaine des moyennes températures (T ⩾ 700°C) et/ou des faibles émissivités, leur utilisation n'est pas fiable.

On connaît en outre du brevet GB-A-1 552 793 un procédé de contrôle de la température d'un fil que l'on déplace selon sa longueur dans une chambre. Un fluide traverse cette chambre, perpendiculairement au sens de déplacement du fil de façon à entrer en contact avec le fil. La température du fluide est mesurée à l'aide de thermocouples logés dans les conduits d'amenée et de sortie du fluide. La différence de température indiquée par les thermocouples est comparée à des valeurs d'étalonnage. Des possibilités de réglage de la température et du débit de fluide sont envisagées.

Cette méthode soulève les observations suivantes le temps d'échange entre le fluide et le fil est très court du fait de l'intersection des directions de passage du fluide et du fil; la surface d'échange est très limitée et au plus égale à la moitié de la surface latérale du fil faisant face à l'arrivée du fluide; le fil entraîne dans son déplacement une gaine d'air qui perturbe l'échange entre le fluide et le fil.

L'invention permet de pallier aux inconvénients ci-dessus signalés et améliorés très sensiblement la précision des mesures de, température sans contact.

Le procédé, selon l'invention, est caractérisé par les étapes telle qu'énoncées dans la revendication 1.

Le dispositif pour la mise en oeuvre dudit procédé est caractérisé principalement selon la revendication 2.

La description qui va suivre, donnée à titre d'exemple, fera bien comprendre comment l'invention peut être réalisée.

La figure 1 est une vue schématique illustrant le procédé suivant l'invention.

La figure 2 est une vue en coupe longitudinale d'un dispositif de mesure de température d'un élément filiforme.

La figure 3 est une vue en coupe longitudinale d'une variante de réalisation du dispositif illustré, figure 2.

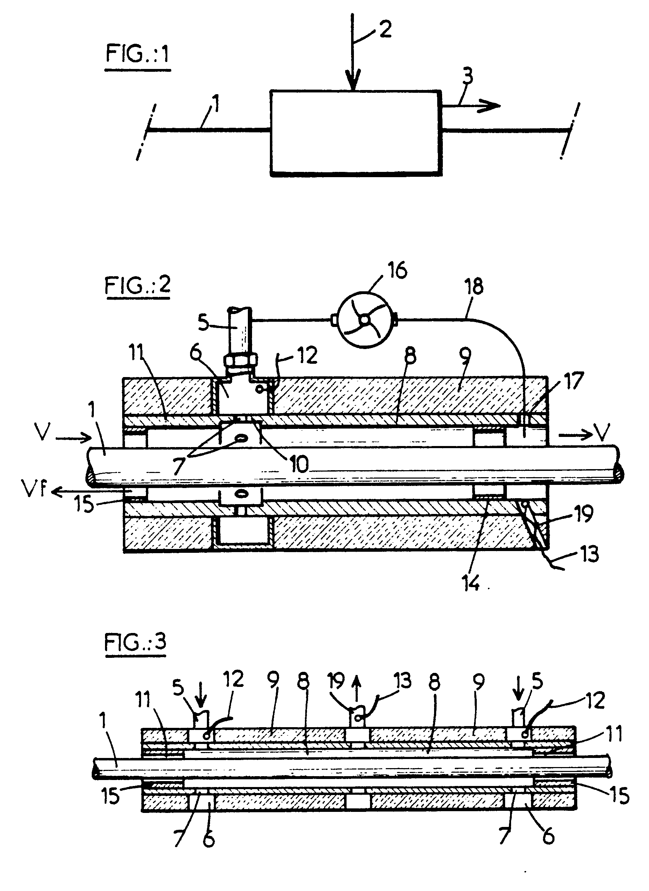

En se reportant à la figure 1, le procédé de mesure d'un élément filiforme, en l'espèce un fil métallique 1, comprend l'injection autour de ce fil d'un fluide (flèche 2) par exemple de l'air à un débit Q déterminé et dont on mesure la température Te, par exemple par un thermocouple. On recueille une partie de ce fluide (flèche 3) après sa mise en contact avec le fil et on mesure sa température Ts par exemple par un deuxième thermocouple. La température Tf du fil étant fonction de la température d'entrée Te, de la température de sortie Ts et du débit Q, il suffit pour un débit donné de rassembler les températures Te et Ts et d'étalonner la relation Tf = f (Te, Ts) pour déterminer la température du fil, ce qui pourra se faire par programmation d'un microprocesseur.

Ce procédé sera d'autant plus performant que l'échange thermique entre le fluide et le fil sera meilleur.

La figure 2 illustre un mode de réalisation d'un dispositif de mesure de température d'un fil sans contact, performant grâce à la mise en oeuvre d'un échange thermique convectif de haute efficacité.

Pour ce faire, on réalise deux zones d'échanges une première zone localisée d'échange par impaction, c'est-à-dire une collision de l'air sur le fil, suivie d'une seconde zone d'échange longitudinale le long d'une partie du fil par léchage.

La première zone d'échange comprend un conduit 5 d'alimentation en air débouchant dans une chambre annulaire 6 entourant le fil, et communiquant avec l'espace périphérique du fil par des orifices 7 éventuellement équipés d'ajustages non représentés, aménagés dans la paroi annulaire 10 en regard avec le fil 1, et délivrant des jets d'air dirigés perpendiculairement au fil.

Cette première zone d'échange est prolongée dans le sens du défilement du fil par une deuxième zone comprenant un conduit annulaire 8, entourant à proximité immédiate le fil 1, et qui dirige l'air issu des ajustages le long du fil (ce conduit est calorifugé par un isolant 9). La première zone d'échange peut être également prolongée en amont par un conduit annulaire 11 permettant d'ajuster la surpression dans la zone de jets, mais plus court que le conduit 8.

Le débit nominal de l'air est choisi aussi faible que possible en respectant toutefois un débit minimum qui assure à l'air une vitesse supérieure à la vitesse d'entraînement de l'air ambiant par le fil. Le débit d'air ambiant entraîné dans le dispositif est alors negligeable vis-à-vis du débit de mesure.

La mesure de la température de l'air est effectuée en deux points:

- en amont, dans la chambre annulaire 6 par un thermocouple schématisé en 12,

- en aval, dans le conduit annulaire 8 ou dans un conduit de prélèvement 19 à proximité de l'ouverture terminale, par un thermocouple schématisé en 13.

Afin que la mesure de température réalisée en sortie par le thermocouple 13 soit représentative de la température de mélange de l'air dans le conduit annulaire, on aménagera pour les configurations de mesure les plus délicates (régime laminaire) un des dispositifs suivants

- disposition d'une bague perturbatrice de l'écoulement 14 dans le conduit 8 en amont du point de mesure 13 provoquant un brassage et une homogénéisation de l'écoulement,

- couplage en opposition de deux enceintes d'échange selon le dispositif schématisé dans la figure 3, avec mise en commun dans la zone de mélange centrale d'un conduit de prélèvement 19 où s'effectue la mesure de température de sortie 13.

Une bague 15 sera aménagée dans le conduit 11 afin d'ajuster une surpression suffisante dans le conduit 8 de façon à limiter l'entraînement par le fil d'air ambiant et d'assurer un débit de mesure important dans le conduit 19.

De préférence, la première zone d'échange sera dimensionnée de manière à respecter les conditions suivantes:

$$\frac{h}{Dj} \geqslant 4 \text{ et } \frac{Dc}{Nj Dj} \leqslant 2$$

- h étant la distance entre les orifices 7 et la surface du fil 1,
- Dj le diamètre des orifices 7,
- Dc le diamètre de la paroi annulaire 10 comportant les orifices 7,
- Nj le nombre d'orifices.

De même, la seconde zone d'échange sera dimensionnée de façon que:

- la longueur I du conduit 8 soit maximum,
- que le rapport diamètre intérieur du conduit 8 sur diamètre du fil soit minimum,
- l'épaisseur du conduit 8 et sa conductivité seront minimales.

Suivant une variante de réalisation, on peut accroître l'efficacité apparente de l'échangeur en recirculant une partie du débit, soit à l'aide d'un éjecteur à faible taux de dilution, soit à l'aide d'un ventilateur 16 captant le fluide par des orifices 17 et le conduisant vers le conduit 5 par des moyens appropriés 18, figure 2.

On peut limiter l'étalonnage à un bilan sur les pertes en préchauffant l'air injecté de façon que la température de sortie du fluide soit en nominal, égale à la température d'entrée. Ainsi on pourra considérer que la température de sortie du fluide est égale à la température du fil, à pertes près de l'air dans l'enceinte de mesure.

**Revendications**

1. Procédé pour mesurer la température d'un élément filiforme en défilement sans contact mécanique d'un organe de mesure avec ledit élément, par mesure de l'écart de température en entrée et en sortie d'un flux de fluide amené en contact avec l'élément filiforme, caractérisé par les étapes suivantes:

a) on fait passer l'élément filiforme dans une première zone d'échange pendant qu'un fluide d'alimentation dont on mesure la température et le débit est envoyé sur et tout autour de l'élément filiforme, le débit du fluide d'alimentation dans cette première zone étant choisi aussi faible que possible en respectant un débit minimum pour que ledit fluide ait une vitesse supérieure à la vitesse d'entraînement du fluide ambiant par l'élément filiforme;

b) on fait passer l'élément filiforme de la première zone à une deuxième zone longitudinale d'échange dans laquelle l'élément filiforme est baigné par le fluide, on mesure la température dudit fluide près de son extrémité opposée à celle de la première zone d'échange;

c) on détermine la temperature de l'élément filiforme à partir d'une relation entre la température du fluide d'alimentation de la première zone, la température du fluide près de l'extrémité de la deuxième zone et du débit du fluide d'alimentation.

2. Dispositif pour mesurer la température d'un élément filiforme en défilement sans contact mécanique d'un organe de mesure avec ledit élément, caractérisé en ce qu'il comprend au moins:

- une enceinte allongée, thermiquement isolée, entourant la partie longitudinale de l'élément (1) pour définir autour de celui-ci, un conduit annulaire (8) ouvert aux extrémités, comprenant au moins deux zones d'échange thermique adjacentes;

- des moyens d'injection (6, 7) d'un fluide dans une première desdites zones d'échange formant des jets de fluide, frappant radialement ledit élément sur toute sa périphérie;

- des moyens (12) pour mesurer respectivement le débit et la température du fluide injecté;

- des moyens (13) pour mesurer la température du fluide sortant à l'extrémité, opposée à la première zone, d'une deuxième zone adjacente dans laquelle le fluide s'écoule longitudinalement autour de l'élément;

- et des moyens pour calculer la température de l'élément à partir des mesures de débit, des températures d'entrée et de sortie du fluide.

3. Dispositif selon la revendication 2, caractérisé en ce que la deuxième zone d'échange s'étendant à partir de la première zone, a un diamètre inférieur à celui de la première zone et une longueur plus grande.

4. Dispositif selon la revendication 2 ou 3, caractérisé en ce qu'une partie du fluide est captée (17) à la sortie de l'enceinte (8) et est recirculée par des moyens (16, 18).

5. Dispositif selon l'une des revendications 2 à 4, caractérisé en ce qu'un obstacle, tel qu'une bague (14) est disposée dans l'enceinte (8) en amont de la mesure de température à la sortie du fluide.

6. Dispositif selon l'une des revendications 2 à 4, caractérisé en ce qu'une bague (15) est placée à l'entrée et/ou à la sortie du conduit (8).

7. Dispositif selon l'une des revendications 2 à 5, caractérisé en ce que les moyens de mesure de température (12, 13) sont respectivement disposés dans l'enceinte (6) et à la sortie de l'enceinte (8).

8. Couplage en opposition de deux dispositifs d'échange tels que décrits suivant l'une des revendications 2 à 7, avec mise en commun d'un conduit de prélèvement (19) pour effectuer une mesure de la température de sortie (13) dans la zone centrale de mélange.

**Patentansprüche**

1. Verfahren zur Bestimmung der Temperatur eines vorbeilaufenden, fadenförmigen Elementes, bei dem kein mechanischer Kontakt zwischen der Meßvorrichtung und dem Element stattfindet, mittels Bestimmung der Abweichung zwischen der Eingangs- und der Ausgangstemperatur eines Fluidumstromes, der in Kontakt mit dem fadenförmigen Element gebracht wird, gekennzeichnet durch die folgenden Schritte:

a) man läßt ein fadenförmiges Element durch einen ersten Austauschbereich passieren, während ein Versorgungsfluidum, dessen Temperatur und Durchfluß gemessen wird, auf und um das gesamte fadenförmige Element geleitet wird, wobei der Durchfluß des versorgungsfluidums in diesem ersten Bereich so schwach wie möglich gewählt wird, man jedoch darauf achtet, daß ein Minimaldurchfluß gewährleistet ist, damit das Versorgungsfluidum eine Geschwindigkeit aufweist, die größer als die Geschwindigkeit des das fadenförmige Element umgebende und von diesem mitgerissene Fluidums ist;

b) man läßt das fadenförmige Element aus dem ersten Bereich in einen zweiten Längsaustauschbereich passieren, in dem das fadenförmige Element von dem Fluidum umspült wird, man mißt die Temperatur des Fluidums nahe seines dem ersten Austauschbereich entgegengesetzten Endes;

c) man bestimmt die Temperatur des fadenförmigen Elementes ausgehend von einem Verhältnis zwischen der Temperatur des Versorgungsfluidums in dem ersten Bereich, der Temperatur des Fluidums nahe dem Ende des zweiten Bereiches und dem Durchfluß des Versorgungsfluidums.

2. Vorrichtung zur Bestimmung der Temperatur eines vorbeilaufenden fadenförmigen Elementes, bei der kein mechanischer Kontakt eines Meßorgans mit dem Element stattfindet, dadurch gekennzeichnet, daß sie mindestens enthält:

- eine längliche Umfassung, die wärmeisoliert ist, und den Längsteil des Elementes (1) umgibt, um um dieses herum eine ringförmige Leitung (8) zu definieren, die an ihren Enden geöffnet ist und mindestens zwei benachbarte Wärmeaustauschbereiche enthält;

- Injektionsvorrichtungen (6, 7) für eine Fluidum in einen ersten der Austauschbereiche, zur Erzeugung von Fluidumströmen, die radial auf dem gesamten Umfang des Elementes auftreffen;

- Vorrichtungen (12) zur Bestimmung des Durchflusses und der Temperatur des injizierten Fluidums;

- Vorrichtungen (13) zur Bestimmung der Temperatur des Fluidums, das an dem dem ersten Bereich gegenüberliegenden Ende eines zweiten benachbarten Bereiches austritt, in dem das Fluidum in Längsrichtung um das Element strömt;

- und Vorrichtungen zur Bestimmung der Temperatur des Elementes ausgehend von den Messungen des Durchflusses, der Eingangs- und der Ausgangstemperatur des Fluidums.

3. Vorrichtung nach Anspruch 2, dadurch gekennzeichnet, daß der zweite sich ausgehend von dem ersten Bereich erstreckende Austauschbereich einen geringeren Durchmesser im Vergleich zu dem des ersten Bereiches und eine größere Länge aufweist.

4. Vorrichtung nach einem der Ansprüche 2 oder 3, dadurch gekennzeichnet, daß ein Teil des Fluidums am Ausgang (17) der Umfassung (8) aufgefangen und durch die Vorrichtungen (16, 18) erneut zirkuliert wird.

5. Vorrichtung nach einem der Ansprüche 2 bis 4, dadurch gekennzeichnet, daß ein Hindernis, wie z. B. ein Stellring (14) in der Umfassung (8) stromaufwärts zur Temperaturmessung am Ausgang des Fluidums angeordnet wird.

6. Vorrichtung nach einem der Ansprüche 2 bis 4, dadurch gekennzeichnet, daß ein Ring (15) am Eingang und/oder am Ausgang der Leitung (8) angeordnet ist.

7. Vorrichtung nach einem der Ansprüche 2 bis 5, dadurch gekennzeichnet, daß die Temperaturmeßvorrichtungen (12, 13) in der Umfassung (6) und an dem Ausgang der Umfassung (8) angeordnet sind.

8. Gegenläufige Schaltung von zwei Austauschvorrichtungen, wie beschrieben, nach einem der Ansprüche 2 bis 9, mit einer gemeinsamen Probeleitung (19), um eine Bestimmung der Ausgangstemperatur (13) in dem zentralen Mischbereich durchzuführen.

## Claims

1. Method for measuring the temperature of a running filiform element without any mechanical contact being made between a measuring means and said element, through measuring the temperature difference between the temperature of an air flow at an inlet, and at an outlet after a contact has been established between said air flow and said filiform element, characterized by the following steps:

a) moving said filiform element through a first ex-`change zone while a fluid, the temperature and flow of which are measured, is supplied to and all around the filiform element, the supplied fluid flow in said first zone being chosen so as to be as small as possible, above a minimum level so as the fluid speed is higher than that of the fluid drawn by the filiform element,

b) moving said filiform element from the first zone to a second zone of longitudinal exchange in which the filiform element is plunged in the fluid, measuring the temperature of said fluid near its end opposite to the one of the first exchange zone,

c) determining the temperature of the filiform element from a relationship between the supplied fluid temperature in the first zone, the fluid temperature near the end of the second zone and the supplied fluid flow.

2. Device for measuring the temperature of a filiform element running without contacting a measuring element, characterized in that it comprises, at least

- an elongated chamber, thermally isolated, surrounding` the longitudinal part of the element (1) to define an annular duct (8) opened at both ends, comprising at least two adjacent thermal exchange zones,
- means (12) for respectively measuring the flow and the temperature of the injected fluid,
- means (13) for measuring the fluid temperature at the end, opposite to the first zone, of an adjacent second zone in which the fluid flows longitudinally around the element,
- and means for computing the element temperature using measurements of the flow and of the input and output temperatures of the fluid.

3. Device as claimed in claim 2, characterized in that the second exchange zone extends from the first zone, has a smaller diameter than that of the first zone and a greater length.

4. Device as claimed in claim 2 or 3, characterized in that part of the fluid is taken off (17) at the outlet of the duct (8) and is recirculated by means (16, 18).

5. Device as claimed in one of claims 2 to 4, characterized in that an obstacle, such as a ring (14), is disposed in the duct (8) upstream of the temperature measurement.

6. Device as claimed in anyone of claims 2 to 4, characterized in that a ring (15) is disposed at the input and/or output of duct (8).

7. Device as claimed in one of claims 2 to 5, characterized in that the temperature measurement means (12, 13) are respectively disposed in the chamber (6) and at the outlet of the duct (8).

8. Connection in opposition of two exchange devices as described in one of claims 2 to 7, with the use in common of a sampling duct (19) for measuring the outlet temperature (13) in the central mixing zone.

FIG.:1

FIG.:2

FIG.:3